# FASCICULE DE BREVET EUROPEEN

(11) **EP 3 134 708 B1**
(45) Date de publication et mention de la délivrance du brevet: **28.02.2018**
(21) Numéro de dépôt: 15720388.6
(22) Date de dépôt: 14.04.2015
(51) Int. Cl.: G01B 11/14, G01B 21/14, G01B 11/02

(54) **DISPOSITIF DE CONTRÔLE DIMENSIONNEL DE RECIPIENTS PAR DETECTION OPTIQUE SANS CONTACT**
VORRICHTUNG ZUR DIMENSIONALEN ÜBERPRÜFUNG VON BEHÄLTERN ÜBER BERÜHRUNGSLOSE OPTISCHE DETEKTION
DEVICE FOR DIMENSIONALLY CHECKING CONTAINERS VIA CONTACTLESS OPTICAL DETECTION

(30) Priorité: 22.04.2014 FR 1453578
(43) Date de publication de la demande: 01.03.2017
(73) Titulaire: Tiama, 69390 Vourles (FR)
(72) Inventeur: COLLE, Olivier, 69600 Oullins (FR)
(74) Mandataire: Thibault, Jean-Marc
(86) Numéro de dépôt international: PCT/FR2015/051002
(87) Numéro de publication internationale: WO 2015/162357

(56) Documents cités:
- EP-A1- 1 611 965
- FR-A1- 2 965 344
- FR-A1- 2 973 107
- JP-A- H08 236 923
- US-A1- 2002 078 769
- US-A1- 2013 042 705

## Description

La présente invention concerne le domaine technique de l'inspection d'objets creux ou récipients au sens général, tels que par exemple des bouteilles, des pots, des flacons notamment en verre en vue de déceler d'éventuels défauts dimensionnels ou de surface présentés par un tel récipient.

Dans le domaine technique de l'inspection de récipients notamment en verre, il est prévu après leur fabrication, de réaliser différents contrôles notamment du goulot ou de la bague du récipient (diamètres interne/externe, étanchéité, hauteur) et du col du récipient (diamètre intérieur, profil intérieur, brochage).

Afin de réaliser de telles inspections, il est connu d'utiliser un ou plusieurs dispositifs comportant chacun une tête d'inspection destinée à être abaissée soit sur une distance précise en fonction de la nature du récipient, soit pour venir en contact avec le récipient, soit pour être en appui sur le récipient le temps de l'inspection. De manière classique, une telle inspection est réalisée à l'aide d'une machine présentant soit un convoyeur linéaire adapté pour maintenir les récipients dans des positions précises, soit un convoyeur à étoiles, avec un mouvement circulaire indexé pour placer les récipients en relation avec différents postes de contrôle. Chaque tête d'inspection est déplacée selon un mouvement vertical alternatif pour un convoyeur à étoiles tandis que pour un convoyeur linéaire, la tête d'inspection présente de façon supplémentaire, un déplacement horizontal.

Le brevet FR 2 818 748 décrit un dispositif d'inspection comportant une tête montée sur une glissière horizontale qui est fixée sur un chariot déplacé selon des mouvements alternatifs verticaux par une courroie montée entre une poulie folle et une poulie menée par un servomoteur. L'un des inconvénients d'un tel dispositif est la masse déplacée relativement importante, ce qui limite la vitesse et l'accélération de déplacement de la tête d'inspection. Il s'ensuit que la cadence d'inspection des récipients est limitée, ce qui représente un inconvénient majeur dans le processus de production en ligne de récipients. Un autre inconvénient d'un tel dispositif connu apparaît lorsque la tête d'inspection est destinée à venir en contact avec le récipient. En effet, la course de la tête d'inspection n'est pas définie à cause de la dispersion de hauteur des récipients et des défauts qui influent sur cette course comme ceux ne permettant pas à la tête d'inspection de descendre lors d'une opération de brochage. Aussi, compte tenu de l'indétermination de cette course et de la masse embarquée, il peut survenir un choc important entre la tête d'inspection et le récipient, ce qui est susceptible d'entraîner la détérioration du récipient et/ou de la tête d'inspection. Enfin un tel dispositif ne permet pas de déterminer la provenance des défauts détectés.

Le brevet GB 1 432 120 décrit un dispositif pour inspecter les récipients comportant plusieurs postes de contrôle dont l'un vise à contrôler la conformité dimensionnelle des bagues et des cols des récipients. Ce poste de contrôle comporte un équipage mobile entraîné par un système de motorisation selon un mouvement alternatif par rapport au bâti du dispositif, dans une direction de déplacement parallèle à l'axe de symétrie des récipients. Cet équipage mobile est équipé d'un calibre externe de contrôle de l'extérieur de la bague des récipients et d'un calibre interne de contrôle de l'intérieur de la bague et du col des récipients.

Le dispositif décrit par ce document GB 1 432 120 possède les mêmes inconvénients que le dispositif d'inspection décrit par le brevet FR 2 818 748.

Il est également connu par la demande de brevet FR 2 174 203 une machine d'inspection pour les bagues et cols de récipients comportant un équipage mobile entraîné par un système de motorisation selon un mouvement alternatif cyclique par rapport à un bâti de la machine. L'équipage mobile est déplacé selon une direction verticale parallèle à l'axe de symétrie des récipients. L'équipage mobile est équipé d'un calibre ou gabarit de contrôle de l'extérieur de la bague. Ce gabarit est monté à l'extrémité d'un manchon inférieur guidé en coulissement vertical alternatif par rapport au bâti.

L'équipage mobile comporte également un manchon supérieur monté coaxialement à l'intérieur du manchon inférieur et pourvu d'un calibre ou d'une jauge de contrôle du goulot. Ce manchon supérieur est entraîné en déplacement vertical alternatif pour assurer l'engagement de la jauge de contrôle à l'intérieur du goulot du récipient.

Chaque manchon est pourvu d'un collet destiné à passer à l'intérieur d'une encoche d'un levier lorsque le gabarit et la jauge occupent une position correspondant à un récipient non défectueux. Si le récipient ne respecte pas les tolérances prescrites, l'un et/ou l'autre des manchons occupe une position dans laquelle le collet actionne le levier qui déclenche un commutateur indiquant que les dimensions de la bouteille ne répondent pas aux tolérances prédéterminées.

Un tel dispositif permet de savoir si le défaut détecté provient du goulot ou de l'extérieur de la bague, Toutefois, un tel dispositif ne permet pas de déterminer la nature du défaut dimensionnel détecté par la jauge comme par exemple un goulot trop étroit ou trop grand et par le gabarit comme par exemple une bague trop grande ou trop petite.

Or, il apparaît important de discriminer la nature des défauts présentés par les récipients défectueux pour permettre d'agir au mieux sur le procédé de fabrication de ces récipients.

La demande de brevet FR 2 973 107 décrit un dispositif de contrôle dimensionnel de récipients mettant en oeuvre une tête de calibrage comportant notamment un calibre externe et un calibre interne. Un tel dispositif comporte également des moyens de détection d'un écart de position du calibre interne par rapport au calibre externe permettant de caractériser le défaut de débouchage. Ces moyens de détection comportent des moyens de visée optique selon une direction perpendiculaire au déplacement de l'équipage mobile comportant un émetteur d'un faisceau lumineux et une cellule de réception placée en vis-à-vis. L'écart de position du calibre interne par rapport au calibre externe est détecté grâce à l'actionnement d'une cible qui obstrue ou non la cellule de réception. La cellule détecte donc leur position relative lorsque l'équipage mobile est en position basse, les calibres étant normalement au contact maximum avec le récipient. Un tel dispositif permet de détecter des défauts de diamètre de débouchage. Toutefois, un tel dispositif ne permet pas de déterminer la conformité dimensionnelle des bagues et/ou des cols des récipients et des différents types de défauts pour les récipients dimensionnellement non conformes comme la hauteur et le diamètre interne de brochage et le diamètre de débouchage et le diamètre externe.

La demande de brevet FR 2 965 344 décrit un dispositif d'inspection pour les bagues et cols de récipients comportant un équipage mobile entraîné en mouvement alternatif par rapport à un bâti selon une direction de déplacement parallèle à l'axe de symétrie des récipients. Cet équipage mobile est équipé d'un calibre externe de contrôle de l'extérieur de la bague des récipients et d'un calibre interne de contrôle de l'intérieur de la bague et du col des récipients. Les calibres externe et interne sont montés mobiles indépendamment l'un de l'autre et par rapport à l'équipage mobile, selon une direction de déplacement parallèle à la direction de déplacement de l'équipage mobile.

Un tel dispositif comporte également un système de mesure dans la direction de déplacement de la position de l'équipage mobile par rapport au bâti. Ce dispositif comporte également un système de détection du contact intervenant entre le calibre interne et le récipient lors du mouvement de l'équipage mobile permettant de détecter les occurrences de contact du calibre interne avec le récipient. De même, ce dispositif comporte un système de détection du contact intervenant entre le calibre externe et le récipient lors du mouvement de l'équipage mobile permettant de détecter les occurrences de contact entre le calibre externe et le récipient. En fonction des mesures de la position de l'équipage mobile et des occurrences de contact entre les calibres et le récipient, l'unité de traitement de ce dispositif permet de déterminer la conformité dimensionnelle des bagues et/ou des cols des récipients et les types de défauts pour les récipients dimensionnellement non conformes.

Chaque système de détection de contact comprend un capteur dont une partie est montée solidaire de l'équipage mobile et une autre partie solidaire des calibres. Le capteur de contact détecte ainsi la mise en vis-à-vis des parties du capteur au moment du contact des calibres avec le récipient.

Les inconvénients d'un tel dispositif sont liés au montage du capteur sur l'équipage mobile qui impose la mise en place d'une connexion électrique entre le capteur embarqué et l'unité de traitement fixe. Outre l'inconvénient lié à la surcharge à déplacer, les vitesses et accélérations de l'équipement mobile imposent des contraintes sur le capteur embarqué entraînant sa fragilité.

La demande de brevet EP 1 611 965 décrit un dispositif d'inspection pour des récipients comportant une tête d'inspection portée par une tige entraînée en déplacement vertical alternatif. Cette tige est équipée d'un système de compensation-amortissement pourvu d'un capteur adapté pour détecter le déplacement relatif entre la tige menée et la tête d'inspection afin de détecter le contact entre la tête d'inspection et le récipient. Un tel dispositif présente en outre les inconvénients liés au montage du capteur sur la tige mobile.

Dans l'état de la technique, il est également connu dans le domaine du soudage de composants sur un circuit, par la demande de brevet JP H08 236923 un système comportant un outil de soudure mobile en déplacement et équipé d'un capteur de contact tel qu'une jauge de contrainte. Le système décrit par ce document présente les inconvénients liés au montage d'un capteur sur l'équipage mobile.

De même, la demande de brevet US 2013/042705 décrit un dispositif de mesure de l'épaisseur d'une bande à l'aide d'une pointe de mesure maintenue en contact permanent, par la pesanteur, sur la bande. Un capteur détecte la position de la pointe de mesure permettant de donner l'information sur l'épaisseur de la bande. Un tel dispositif ne comporte pas un système de mesure permettant de détecter les occurrences de contact car dans un tel dispositif, le contact est permanent.

L'objet de la présente invention vise à remédier aux inconvénients de l'état de la technique en proposant un dispositif permettant d'inspecter à haute cadence la bague et le col de récipients pour vérifier la conformité dimensionnelle des bagues et des cois des récipients et connaître le type de défauts détectés, un tel dispositif étant résistant, précis et peu encombrant.

Pour atteindre un tel objectif, l'objet de l'invention concerne un dispositif d'inspection pour les bagues et cols de récipients, comportant :
- un équipage mobile entraîné par rapport à un bâti, en un mouvement alternatif selon une direction de déplacement parallèle à l'axe de symétrie des récipients et avec une course maximale, l'équipage mobile étant équipé d'au moins un premier calibre de contrôle de la bague et/ou du col des récipients, monté mobile par rapport à l'équipage mobile selon une direction de déplacement parallèle à la direction de déplacement de l'équipage mobile ;
- un système de mesure de la position du calibre de contrôle par rapport au bâti, dans la direction de déplacement lorsqu'un contact intervient entre le calibre de contrôle et le récipient, le système de mesure étant relié à une unité de traitement ;
- et une unité de traitement permettant en fonction des mesures de la position de l'équipage mobile lors des occurrences de contact entre le calibre et le récipient, de déterminer la conformité dimensionnelle des bagues et/ou cols des récipients et les types de défauts pour les récipients dimensionnellement non conformes.

Selon l'invention :
- le système de mesure comporte un système sans contact d'émission-réception d'un faisceau optique sur le trajet duquel est disposée une cible montée solidaire du premier calibre de contrôle, le système d'émission-réception étant monté solidaire du bâti, et délivrant des mesures en continu de la position du premier calibre de contrôle par rapport au bâti ;
- l'unité de traitement comporte des moyens pour détecter lorsque les mesures de la position du premier calibre de contrôle délivrées par le système d'émission-réception ne varient plus, pour déterminer l'occurrence du contact du premier calibre de contrôle avec le récipient.

L'objet de l'invention concerne également un dispositif d'inspection comportant en combinaison l'une et/ou l'autre des caractéristiques additionnelles suivantes :
- l'équipage mobile comporte un deuxième calibre de contrôle, l'un des calibres étant dit externe et contrôlant l'extérieur de la bague des récipients, tandis que l'autre des calibres est dit interne et contrôle l'intérieur de la bague et le col des récipients, les deux calibres étant montés mobiles indépendamment l'un de l'autre et par rapport à l'équipage mobile selon une direction de déplacement parallèle à la direction de l'équipage mobile, le système de mesure comportant un système sans contact d'émission-réception d'un faisceau optique sur le trajet duquel est disposée une cible montée solidaire du deuxième calibre de contrôle, le système d'émission-réception étant monté solidaire du bâti, et délivrant des mesures en continu de la position du deuxième calibre de contrôle par rapport au bâti, l'unité de traitement comportant des moyens pour détecter lorsque les mesures de la position du deuxième calibre de contrôle délivrées par le système d'émission-réception ne varient plus, pour déterminer l'occurrence du contact du deuxième calibre de contrôle avec le récipient ;
- l'unité de traitement est reliée à un système de motorisation de l'équipage mobile selon son mouvement alternatif, l'unité de traitement pilotant le système de motorisation pour assurer la remontée de l'équipage mobile dès la détection d'une occurrence de contact entre un calibre de contrôle et le récipient ;
- le système de mesure de la position d'un calibre de contrôle est un capteur optique de distance, déterminant les mesures de la position du calibre de contrôle à partir de la longueur du chemin optique entre la cible et le système d'émission-réception ;
- le système de mesure détermine la longueur du chemin optique par une méthode de temps de vol ou d'interférométrie ;
- le système de mesure de la position d'un calibre de contrôle est un capteur optique de position, déterminant les mesures de la position du calibre de contrôle, à partir de la position de la cible dans son champ de mesure.

Diverses autres caractéristiques ressortent de la description faite ci-dessous en référence aux dessins annexés qui montrent, à titre d'exemples non limitatifs, des formes de réalisation de l'objet de l'invention.

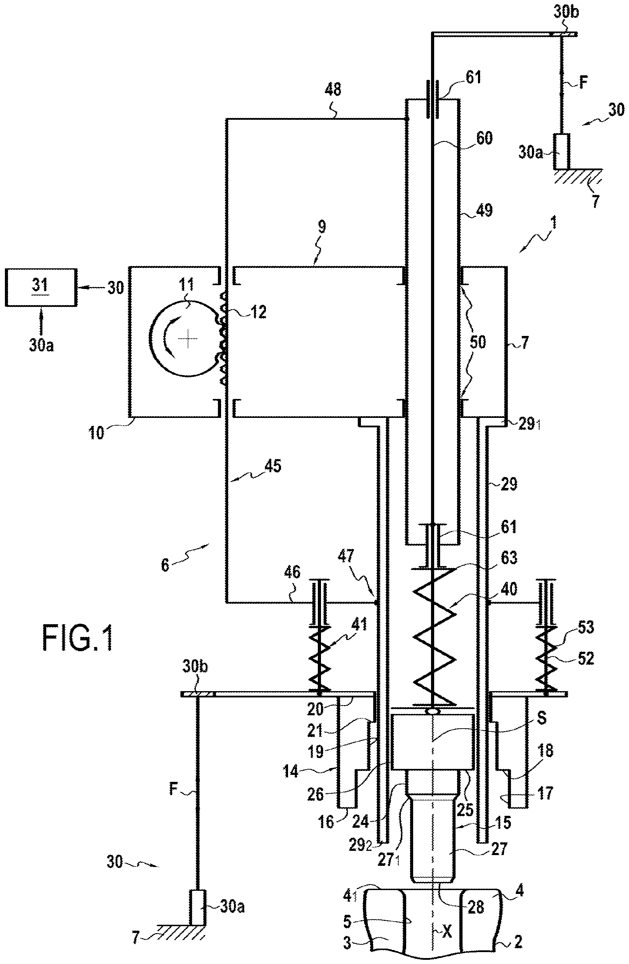

Les **Figures 1** et **2** sont des vues en coupe élévation schématique du dispositif d'inspection conforme à l'invention en position respectivement dégagée et de contrôle, mettant en oeuvre un capteur optique de distance.

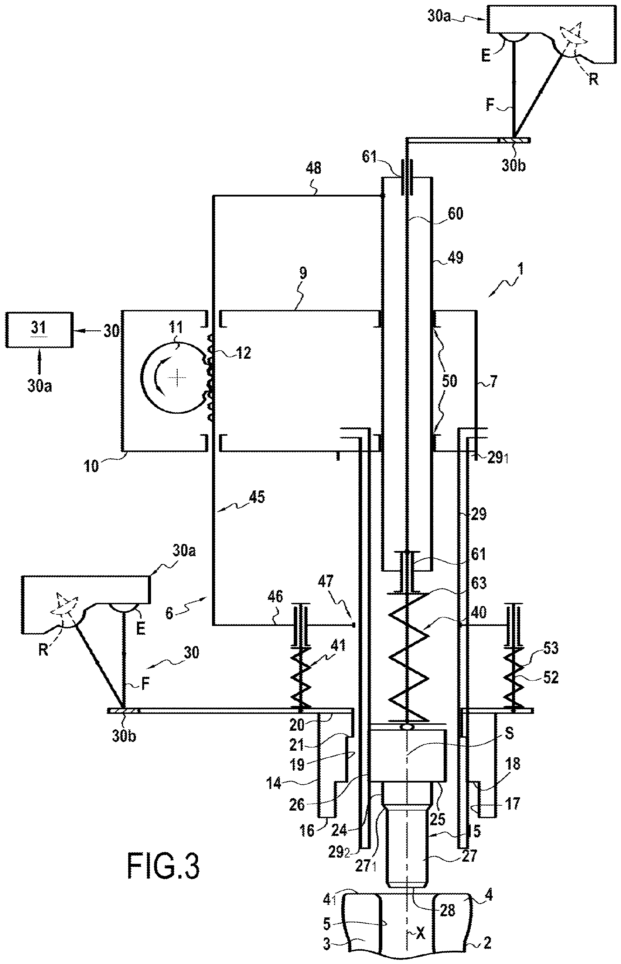

La **Figure 3** est une vue en coupe élévation schématique du dispositif d'inspection conforme à l'invention, mettant en oeuvre un capteur optique de distance à triangulation.
La **Figures 4** est une vue en coupe élévation schématique du dispositif d'inspection conforme à l'invention, mettant en oeuvre un capteur optique de position.

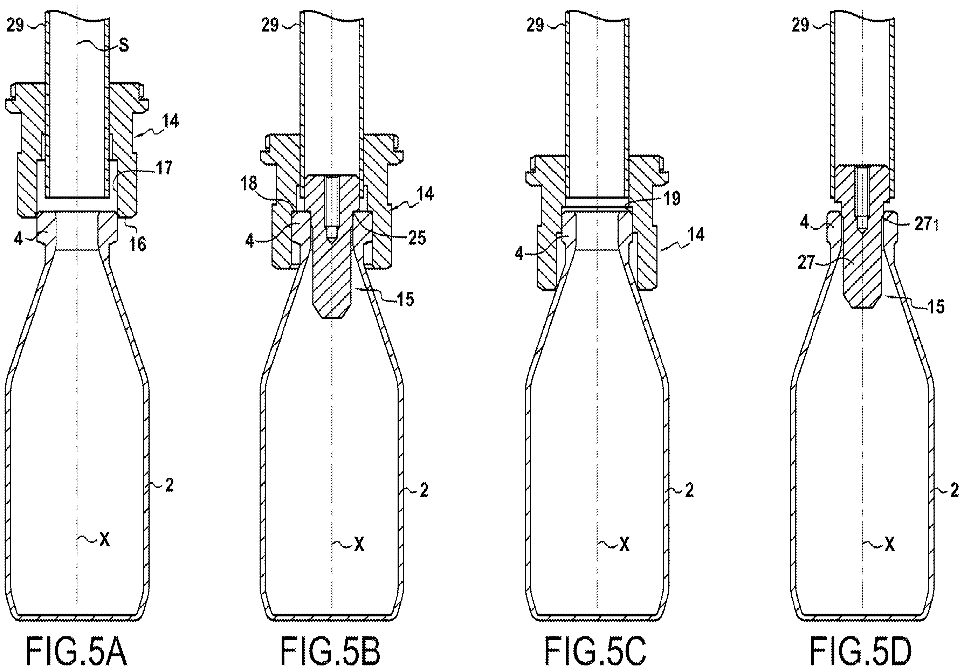

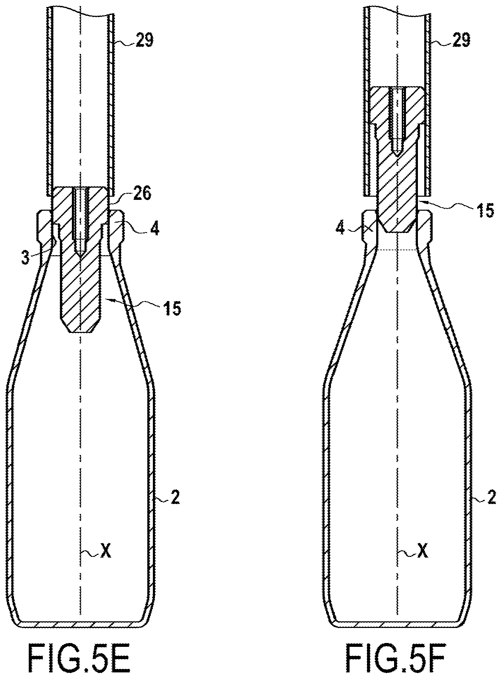

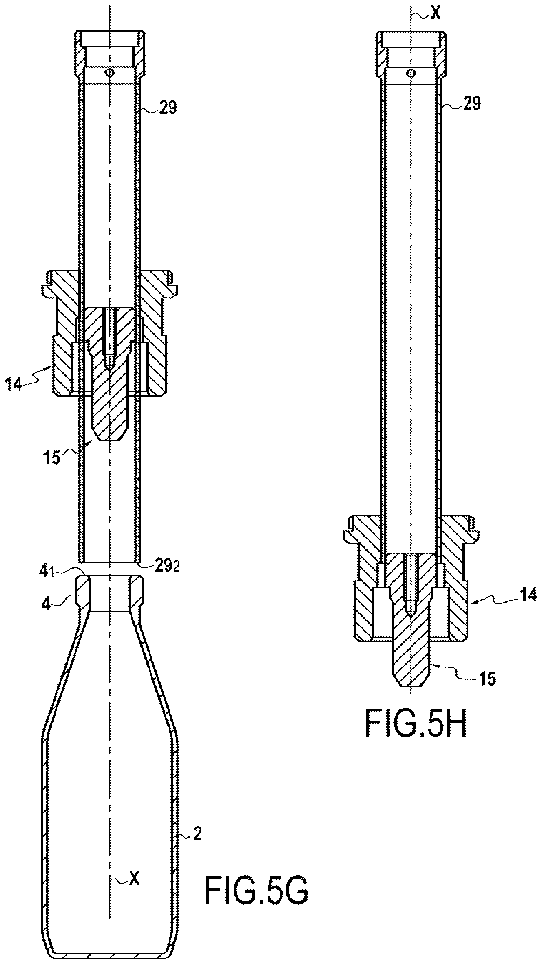

Les **Figures 5A** et **5H** sont des vues en coupe élévation montrant différentes configurations du dispositif d'inspection correspondant respectivement à un contrôle du diamètre de bague mauvais correspondant à une bague trop grande, un débouchage correct et un diamètre bague correct, un contrôle du diamètre de bague mauvais correspondant à une bague trop petite, un débouchage mauvais correspondant à un débouchage trop petit, un débouchage mauvais correspondant à un débouchage trop grand, un débouchage mauvais correspondant à un débouchage col bouché, un dégagement des outillages et une détection correspondant à l'absence d'un récipient.

Tel que cela ressort plus précisément de la **Fig**. **1**, l'objet de l'invention concerne un dispositif d'inspection **1** permettant d'inspecter à haute cadence, des récipients creux **2** de toute nature appropriée par exemple en verre présentant un axe de symétrie **X.** De manière classique, chaque récipient **2** présente un col **3** pourvu d'une bague **4** délimitant intérieurement une ouverture **5** d'accès à l'intérieur du récipient **2.** De manière plus précise, le dispositif d'inspection **1** permet de contrôler le col **3** et la bague **4** de récipients **2** afin de déterminer la conformité dimensionnelle des bagues et des cols des récipients et le type de défauts pour les récipients dimensionnellement non-conformes.

Le dispositif d'inspection **1** est destiné à équiper toute machine de production de récipients qui sont amenés à haute cadence, au droit du dispositif d'inspection **1** à l'aide de tous moyens appropriés. La machine de production et les moyens d'amenée du récipient jusqu'au dispositif d'inspection **1** et les moyens de manutention des récipients ne sont pas décrits car ils sont bien connus de l'homme du métier et ne font pas partie précisément de l'objet de l'invention. Le dispositif d'inspection **1** est monté sur le châssis d'une machine d'inspection intégrée ou rapportée dans la machine de production. Dans l'exemple illustré, il est à noter que les récipients **2** sont amenés au droit du système d'inspection **1** en étant dans une position dressée ou verticale de sorte que l'axe **X** de symétrie de la bouteille peut être considéré comme s'étendant selon une direction verticale.

Le dispositif d'inspection **1** comporte un équipage **6** mobile par rapport à un bâti porteur **7.** L'équipage mobile **6** est entraîné par un système de motorisation **9** pour assurer le déplacement alternatif de l'équipage mobile dans une direction de déplacement parallèle à l'axe de symétrie **X** des récipients **2.** Dans l'exemple illustré, l'équipage mobile **6** présente ainsi pour chaque récipient **2,** un mouvement de descente et un mouvement de remontée selon une direction de déplacement vertical puisque la bouteille **2** occupe une position dressée lors de son inspection par le dispositif **1** selon l'invention. Bien entendu, le dispositif **1** est apte à inspecter les bouteilles placées dans des positions différentes.

Selon une caractéristique préférée de réalisation, le système de motorisation **9** comporte un servomoteur **10** dont le corps est fixé sur le bâti porteur **7.** Le servomoteur **10** est pourvu d'un pignon de sortie **11** coopérant avec une crémaillère **12** faisant partie de l'équipage mobile **6.** Le servomoteur **10** est piloté pour entraîner en rotation le pignon de sortie **11** dans un sens et dans un sens contraire pour imprimer de manière cyclique, à la crémaillère **12,** un mouvement de descente et un mouvement de remontée, selon l'axe vertical.

L'équipage mobile **6** comporte au moins un premier calibre de contrôle de la bague et/ou du col des récipients. De préférence, l'équipage mobile **6** comporte, un premier calibre de contrôle et un deuxième calibre de contrôle, l'un des calibres étant un calibre externe **14** de contrôle de l'extérieur de la bague **4** des récipients tandis que l'autre est un calibre interne **15** de contrôle de l'intérieur de la bague et du col des récipients **2.** Comme cela sera expliqué dans la suite de la description, les calibres **14, 15** sont entraînés en déplacement alternatif par l'équipage mobile **6** pour venir en contact avec le récipient **2** au cours du mouvement de descente de l'équipage mobile **6.**

Plus précisément, les calibres **14, 15** sont montés de manière concentrique et possèdent un axe commun de symétrie **S** s'étendant selon une direction verticale de manière qu'en position d'inspection, l'axe de symétrie **X** du récipient **2** et l'axe de symétrie **S** soient alignés. A chaque mouvement de descente de l'équipage mobile **6** selon l'axe vertical **S,** les calibres **14**, **15** contrôlent les dimensions de la bague et du col du récipient présent. Le mouvement de remontée de l'équipage mobile est mis à profit pour enlever le récipient contrôlé et à amener le prochain récipient à inspecter.

Le calibre externe **14** se présente sous la forme d'une cloche de forme annulaire centrée sur l'axe de symétrie **S.** Le calibre externe **14** présente une extrémité inférieure dite d'introduction **16** délimitant une ouverture ou un alésage de calibrage **17.** Le diamètre interne de cet alésage de calibrage **17** est égal au plus grand diamètre pouvant être toléré pour la bague **4** d'un récipient. Ainsi, comme illustré sur la **Fig**. **5A****,** si la bague **4** du récipient présente un diamètre supérieur au diamètre de l'alésage de calibrage **17** (bague trop grande), alors la bague **4** du récipient vient en butée sur l'extrémité inférieure **16** du calibre externe **14.**

L'alésage de calibrage **17** est limité par un épaulement intérieur **18** destiné à venir en contact ou en appui sur le buvant ou le rebord **4₁** de la bague **4.**

Selon une variante préférée de réalisation, le calibre externe **14** comporte également une ouverture ou alésage d'échappement **19** aménagé au-delà de l'épaulement **18** et communiquant avec l'ouverture de calibrage **17** et débouchant à la deuxième extrémité **20** du calibre externe opposée à la première extrémité inférieure **16.** Cet alésage d'échappement **19** est pourvu d'un épaulement d'arrêt **21** situé entre la deuxième extrémité **20** et l'épaulement **18.**

Ainsi, l'alésage de calibrage **17** et l'alésage d'échappement **19** délimitent entre eux, l'épaulement annulaire **18** dont la largeur correspond à la plage de tolérance pour des largeurs de bagues **4** conformes (**Fig**. **5B**). En d'autres termes, dans tous les cas ou la bague **4** présente un diamètre conforme alors le calibre externe **14** vient en appui par son épaulement **18** sur le rebord **4₁** de la bague **4.** Dans le cas où la bague **4** présente un diamètre inférieur au diamètre de l'alésage d'échappement **19** (**Fig**. **5C**), l'alésage d'échappement **19** du calibre externe **14** reçoit la bague **4** qui vient ensuite en contact avec le calibre externe **14** avec l'épaulement d'arrêt **21.**

Le calibre interne **15** se présente sous la forme d'une broche ou d'une jauge montée à l'intérieur du calibre externe **14** et de manière concentrique par rapport au calibre externe **14**. Le calibre **15** qui présente une forme symétrique centrée sur l'axe de symétrie **S,** délimite un tronçon inférieur **24** séparé par un épaulement **25** d'un tronçon supérieur **26.** Le diamètre du tronçon supérieur **25** est supérieur au diamètre présenté par le tronçon inférieur **24.** Le diamètre du tronçon inférieur **24** présente un diamètre correspondant au diamètre minimal pouvant être toléré par le goulot du récipient **2** alors que le diamètre du tronçon supérieur **26** correspond au diamètre maxima! pouvant être toléré pour le goulot du récipient. Ainsi, l'épaulement annulaire **25** qui est délimité entre les tronçons supérieur **26** et inférieur **24** présente une largeur correspondant à la plage de tolérance pour le diamètre interne du col du récipient. Dans le cas où le col **3** présente un diamètre qui est dans la plage de tolérance, le calibre interne **15** vient en butée par son épaulement **25** sur le rebord **4₁** de la bague (**Fig**. **5B**).

Selon une variante préférée de réalisation, le calibre interne **15** comporte également à partir du tronçon inférieur **24** un tronçon d'extrémité **27** présentant un diamètre inférieur par rapport au diamètre du tronçon inférieur **24**. Le tronçon d'extrémité **27** possède une extrémité libre **28** ou de butée présentant tronçon d'extrémité **27** et en particulier par son collier de raccordement **27₁.**

Lorsque le col **3** du récipient **2** présente un diamètre trop petit, alors la broche vient en butée par son tronçon d'extrémité **27** et en particulier par son collier de raccordement **27₁** sur le récipient **2** (**Fig**. **5D**). Si le diamètre interne du col **3** est supérieur au diamètre maximal de la plage de tolérance alors le tronçon supérieur **26** pénètre à l'intérieur du col **3** du récipient **2** (**Fig**. **5E**). Par ailleurs, dans le cas où le col du récipient présente un défaut de bouchage (**Fig**. **5F**), le calibre interne **15** vient en butée au niveau du rebord de la bague, par le tronçon d'extrémité **27.**

Selon une caractéristique préférée de réalisation, un tube extracteur **29** est interposé entre le calibre externe **14** et le calibre interne **15.** Ce tube extracteur **29** comporte une première extrémité **29₁** fixée au bâti **7** de manière que son axe de symétrie longitudinal se trouve confondu avec l'axe de symétrie **S.** Le tube extracteur **29** comporte une deuxième extrémité **29₂** opposée à la première extrémité **29₁,** s'étendant entre le calibre interne **15** et le calibre externe **14.** En d'autres termes, le calibre externe **14** s'étend à l'extérieur du tube extracteur **29** tandis que le calibre interne **15** s'étend à l'intérieur du tube extracteur **29.**

Le diamètre du tube extracteur **29** est adapté pour permettre de venir en contact sur le rebord **4₁** de la bague **4** en cas de remontée du récipient avec l'équipage mobile **6** permettant de dégager le récipient par rapport à l'équipage mobile **6.** (**Fig**. **5G****).**

Il doit être noté que le calibre externe **14** et le calibre interne **15** détectent chaque défaut à un niveau donné de leur déplacement selon l'axe vertical qui est différent d'un défaut à l'autre. Ainsi, le calibre interne **15** occupe par exemple une altitude plus haute lors de la détection d'un col bouché (**Fig**. **5F**) par rapport à l'altitude occupée lorsque le calibre interne **15** détecte un col avec des dimensions correctes (**Fig**. **5B**), De même, le calibre externe **14** occupe, lors de la détection d'un diamètre de bague trop grand (**Fig**. **5A**), une position qui a une altitude supérieure par rapport à la position occupée par ledit calibre externe **14** lors de la détection d'un diamètre de bague trop petit (**Fig**. **5C**).

Le dispositif d'inspection **1** comporte pour chaque calibre **14, 15,** un système **30** de mesure sans contact de la position dudit calibre par rapport au bâti dans la direction de déplacement de l'équipage mobile lorsqu'un contact intervient entre le calibre **14**, **15** et le récipient **2.** Un tel système de mesure **30** permet ainsi de connaître selon la direction verticale dans l'exemple illustré, la position du calibre interne **15** ou externe **14** par rapport au bâti **7,** au moins lorsqu'intervient un contact entre un calibre et le récipient **2.** En d'autres termes, un tel système de mesure **30** permet de donner selon un repère de distance s'établissant selon l'axe vertical, l'abscisse du calibre en contact avec le récipient **2,** par rapport à une origine fixe ou une référence liée au bâti **7**. Le récipient **2** étant positionné sur un plan de pose lié au bâti **7,** le système de mesure **30** donne la position du calibre **14, 15** par rapport au plan de pose du récipient et par suite, par rapport au récipient.

Conformément à l'invention, le système de mesure **30** comporte un système d'émission-réception **30a** d'un faisceau optique **F** sur le trajet duquel est disposée une cible **30b** montée solidaire d'un calibre **14, 15.** Le système d'émission-réception **30a** qui est monté solidaire du bâti **7,** délivre en continu ou en permanence des mesures de la position du calibre par rapport au bâti **7.** Ainsi, le système d'émission-réception **30** délivre en continu les valeurs de distance de chaque calibre **14, 15** par rapport au bâti fixe **7**. Ainsi, l'un des systèmes d'émission-réception **30a** délivre en continu, les mesures de la position du calibre externe **14** par rapport au bâti **7** tandis que l'autre système d'émission-réception **30a** délivre en continu, les mesures de la position du calibre interne **15** par rapport au bâti **7.**

Chaque système de mesure **30** est relié à une unité de traitement **31** de tous types connus en soi par exemple se présentant sous la forme d'un micro-ordinateur. Chaque système de mesure **30** fournit ainsi à l'unité de traitement **31**, les mesures de la position des calibres **14**, **15** par rapport au bâti fixe, c'est-à-dire les valeurs de distance des calibres **14**, **15** par rapport à une référence fixe prise sur le bâti **7** tel que le plan de pose du récipient.

Conformément à l'invention, l'unité de traitement **31** comporte un système ou des moyens pour détecter lorsque les mesures de la position des calibres **14**, **15** délivrées par chaque système d'émission-réception **30a,** ne varient plus. En effet, lorsque la mesure de la position d'un calibre ne varie plus, c'est-à-dire lorsque les valeurs de distance entre un calibre et le bâti **7** ne changent plus, cela correspond à la mise en contact dudit calibre avec le récipient **2.** L'unité de traitement **31** est ainsi adaptée ou configurée pour connaître les occurrences de contact entre le calibre interne **15** et le récipient **2** et entre le calibre externe **14** et le récipient **2** lors du mouvement de l'équipage mobile **6**.

Par ailleurs, le calibre externe **14** et le calibre interne **15** sont montés mobiles selon la direction de déplacement de manière indépendante l'un de l'autre et par rapport à l'équipage mobile **6.** En d'autres termes, il doit être compris que chaque calibre **14, 15** comporte une possibilité de déplacement individuel selon la direction de déplacement vertical lors du contact du calibre avec le récipient **2.**

De manière avantageuse, le dispositif d'inspection **1** comporte un mécanisme **40** dit interne d'amortissement du contact entre le récipient **2** et le calibre interne **15** et de rappel en position dudit calibre interne. Le dispositif d'inspection **1** comporte également un mécanisme **41** dit externe d'amortissement du contact entre le récipient **2** et le calibre externe **14** et de rappel en position du calibre externe. Chaque mécanisme d'amortissement et de rappel **40, 41** est ainsi apte d'une part, à amortir le contact intervenant entre un calibre **14**, **15** et le récipient **2** et d'autre part, à ramener chaque calibre **14, 15** dans sa position initiale ou de repos en l'absence de contact avec le récipient **2.**

Tel que cela ressort plus précisément de la **Fig**. **1**, le calibre externe **14** et le calibre interne **15** sont montés mobiles selon la direction de déplacement par rapport à un support **45** de l'équipage mobile **6**. Ce support **45** qui est bien entendu mobile par rapport au bâti fixe **7** comporte la crémaillère **12** dont l'extrémité inférieure est montée solidaire d'une pièce **46** assurant le maintien et le guidage du calibre externe **14.** Cette pièce de guidage **46** se présente dans l'exemple illustré, sous la forme d'une plaque pourvue d'un trou de passage **47** pour le tube extracteur **29** autorisant ainsi le mouvement de coulissement vertical de la plaque **46** par rapport au tube extracteur **29** fixe. L'extrémité supérieure de la crémaillère **12** est montée solidaire, par une pièce de liaison **48,** à une chemise de guidage **49** s'étendant sensiblement parallèlement à la crémaillère **12.** Cette chemise **49** est guidée en coulissement vertical par rapport au bâti **7** par des organes de guidage **50** de tous types connus en soi. La chemise **49** est montée de manière à s'étendre au moins en partie à l'intérieur du tube extracteur **29.**

Le support **45** est formé ainsi par la crémaillère **12**, la pièce de liaison **48,** la chemise **49** et la plaque **46**. Le calibre externe **14** et le calibre interne **15** sont montés mobiles indépendamment l'un de l'autre par rapport à ce support **45** et à l'aide d'un mécanisme d'amortissement et de rappel respectivement **41, 40.**

Ainsi, le calibre externe **14** est pourvu, en tant que mécanisme d'amortissement et de rappel **41**, d'au moins un et dans l'exemple illustré de trois axes de guidage **52** montés mobiles par rapport à la plaque **46.** Chaque axe **52** est pourvu d'un ressort de rappel **53** interposé entre le calibre externe **14** et la plaque **46** pour ramener en position de repos, le calibre externe **14.**

En l'absence de contact entre le calibre externe **14** et la bague **4** d'un récipient, le calibre externe **14** occupe, par rapport au support **45,** une position de repos fixée par les ressorts de rappel **53** et une butée portée par les axes **52** et venant en appui sur la plaque **46** (**Fig**. **1**). Lors du contact entre le calibre externe **14** et la bague **4,** le calibre externe **14** est soumis à un effort conduisant à une remontée du calibre externe **14** par rapport au support **45,** conduisant à la compression des ressorts de rappel **53** (**Fig**. **2**). Lors de la remontée de l'équipage mobile **6,** l'appui de la bague **4** sur le calibre externe **14** disparaît de sorte que les ressorts de rappel **53** provoquent le retour du calibre externe **14** à sa position initiale de repos.

Le mécanisme d'amortissement et de rappel **40** comporte une tige **60** présentant une première extrémité inférieure montée solidaire du calibre interne **15.** Cette tige **60** est montée à l'intérieur de la chemise **49** qui assure par tous moyens de guidage appropriés **61,** le guidage en coulissement de la tige **60** par rapport à la chemise **49.**

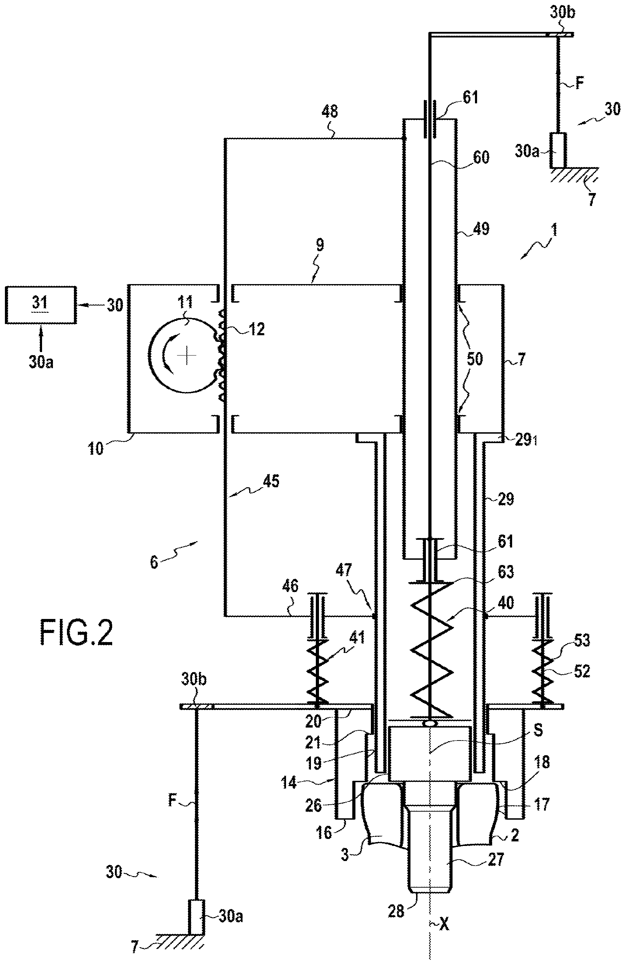

Cette tige **60** comporte avantageusement entre le calibre interne **15** et l'extrémité inférieure de la chemise **49,** un ressort **63.** En l'absence de contact entre le calibre interne **15** et le récipient **2,** le ressort **63** agit sur le calibre interne **15** afin que ce dernier occupe une position de repos par rapport à la chemise de guidage **49**. La tige **60** est maintenue dans cette position à l'aide d'une butée portée par la tige et venant en appui sur la chemise **49** (**Fig**. **1**). Dans le cas d'un appui du calibre interne **15** sur la bague **4**, le calibre interne **15** est soumis à un effort conduisant à une remontée de la tige **60** par rapport à la chemise de guidage **49** (**Fig. 2**). Lors de la suppression de l'appui du calibre **15** sur la bague **4,** le ressort **63** tend à ramener le calibre interne **15** à sa position initiale de repos.

Selon une variante avantageuse de réalisation, l'unité de traitement **31** est reliée au système de motorisation **9** pour piloter le système de motorisation **9** afin d'assurer la remontée de l'équipage mobile **6** dès la détection d'une occurrence de contact entre un calibre de contrôle **14**, **15** et le récipient **2.**

Ainsi, dès qu'un calibre de contrôle **14, 15** rentre en contact avec un article **2** conforme ou défectueux, l'équipage mobile **6** est remonté pour dégager les calibres **14, 15** par rapport au récipient.

Il est à noter que lorsque qu'un calibre de contrôle **14, 15** est bloqué dans une position donnée c'est-à-dire au moment du contact avec un récipient, la position du calibre de contrôle **14**, **15** par rapport au bâti **7** est connue à l'aide du système de mesure **30.** Il est rappelé que cette position du calibre **14, 15** correspond à une valeur de distance prise selon l'axe de déplacement, par rapport à une origine fixe prise sur le bâti **7**.

Bien entendu, le système de mesure **30** sans contact et en continu de la position des calibres de contrôle **14**, **15,** par rapport au bâti fixe **7** peut être réalisé de différentes manières.

Dans les exemples illustrés aux **Fig**. **1** et **2****,** chaque système de mesure **30** est un capteur optique de distance déterminant les mesures de la position du calibre de contrôle **14, 15,** à partir de la longueur du chemin optique entre la cible **30b** et le système d'émission-réception **30a**. Ainsi, pour la mesure de la position du calibre externe **14**, une cible **30b** est montée solidaire de la cloche afin d'être située sur le trajet du faisceau lumineux **F** émis par le système d'émission-réception **30a** fixé sur le bâti **7**. Pour la mesure de la position du calibre interne **15,** une cible **30b** est montée solidaire de la tige **60** afin d'être située sur le trajet des faisceaux lumineux **F** émis par un système d'émission-réception **30a** fixée sur le bâti **7.**

Le capteur optique de distance **30** est par exemple un télémètre dont les faisceaux optiques émis et réfléchis s'établissent selon une direction parallèle à la direction de déplacement de l'équipage mobile **6** (**Fig**. **1** et **2**).

Le système de mesure **30** détermine la longueur du chemin optique par une méthode de temps de vol ou d'interférométrie.

Comme illustré à la **Fig**. **3****,** le faisceau optique **F** émis par un émetteur **E** est parallèle à la direction de déplacement de l'équipage mobile **6** alors que le faisceau optique réfléchi par la cible **30b** et reçu par un récepteur **R** est décalé par rapport à l'émetteur **E.** Le système de mesure **30** détermine la position de la cible **30b** par triangulation.

Dans les exemples illustrés, la cible **30b** est réalisée par tous les moyens appropriés permettant le fonctionnement du capteur optique de distance. Par exemple, la cible **30b,** est une partie de calibre ou un réflecteur de lumière rapporté et fixé sur le calibre.

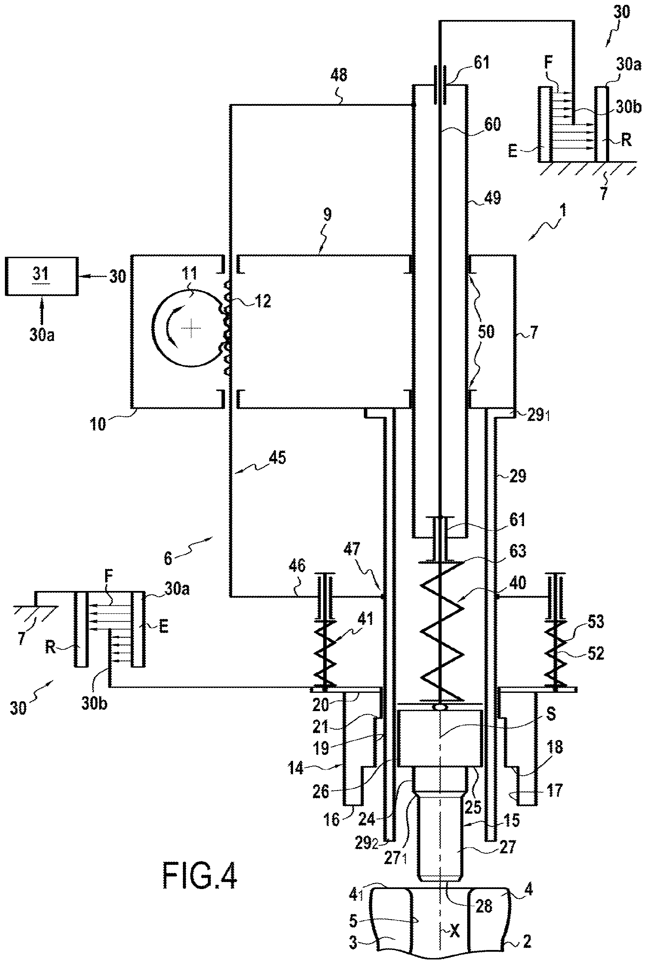

Selon une autre variante de réalisation illustrée à la **Fig. 4****,** chaque système de mesure **30** de la position d'un calibre de contrôle **14**, **15** est un capteur optique de position déterminant les mesures de la position du calibre de contrôle, à partir de la position de la cible dans son champ de mesure.

Le système de mesure **30** de la position du calibre externe **14** comporte ainsi une cible opaque **30b** montée solidaire de la cloche et s'étendant dans le faisceau lumineux **F** entre l'émetteur **E** et le récepteur **R** du système d'émission-réception **30a** monté sur le châssis **7**. Le système de mesure **30** de position du calibre interne **15** comporte une cible opaque **30b** montée solidaire de la tige **60** et s'étendant dans le faisceau lumineux **F** entre l'émetteur **E** et le récepteur **R** du système d'émission-réception **30a** monté sur le châssis **7**. Bien entendu, la largeur du faisceau lumineux **F** pris selon la direction de déplacement de l'équipage mobile **6** correspondant au champ de mesure du capteur optique de position, est au moins égale à la course maximale de l'équipage mobile **6.**

Le système de mesure **30** permet ainsi de déterminer la largeur du faisceau lumineux **F** obstrué (ou non obstrué) par la cible opaque **30b** et, par suite de déterminer la position du bord de la cible opaque **30b** selon la trajectoire de déplacement. Le système de mesure **30** délivre ainsi en continu, des mesures de la position du calibre de contrôle par rapport au bâti **7.**

Le dispositif d'inspection selon l'invention présente l'avantage que le système **30** de mesure de position ne comporte aucun élément actif ou électrique embarqué sur l'équipage mobile **6,** ce qui supprime les causes de casses et les complications liées à l'alimentation et au pilotage avec des équipements en mouvement rapide alternatif. Par ailleurs, la précision de mesure est très bonne avec des capteurs optiques. Enfin, compte-tenu de la bonne précision obtenue pour la position d'arrêt de chaque calibre de contrôle **14, 15,** le système d'inspection selon l'invention permet une bonne discrimination des défauts et une détection précise du moment du contact de sorte que l'unité de traitement **31** pilote la remontée immédiate de l'équipage mobile **6.** Les capteurs optiques mis en oeuvre par l'invention donnent satisfaction en pratique à la différence des télémètres à ultrasons compte tenu de leurs caractéristiques en termes de précision ou de rapidité.

Comme déjà indiqué, chaque faisceau optique **F** est créé selon un segment de longueur au moins égale à la course maximale de l'équipage mobile **6** pour permettre de détecter l'occurrence de contact sur toute la course de l'équipage mobile **6**.

L'unité de traitement **31** est apte, à partir des mesures délivrées par les systèmes **30** de mesure, à déterminer la conformité dimensionnelle des bagues et des cols des récipients **2.** En effet, chaque position de contact des calibres **14, 15** correspond à un contrôle dimensionnel différent de la bague et du col du récipient. A l'aide d'une opération d'étalonnage, il est possible de connaître la position théorique verticale des calibres **14, 15** correspondant à un récipient sans défaut et par suite à un récipient avec défaut.

Dans la mesure où la position des calibres **14, 15** est connue par rapport au bâti **7** c'est-à-dire aussi par rapport au plan de pose des récipients **2,** l'unité de traitement **31** est apte à déterminer précisément la hauteur des récipients à partir de l'occurrence de contact du calibre externe **14** sur la bague du récipient et/ou de l'occurrence de contact du calibre interne **15.**

Le fonctionnement du dispositif d'inspection **1** découle directement de la description qui précède.

Après l'amenée d'un récipient **2** au droit du dispositif d'inspection **1**, le système de motorisation **9** est piloté pour assurer la descente de l'équipage mobile **6.** Dès qu'un calibre **14, 15** rentre en contact avec le récipient **2,** le contact est détecté par l'unité de traitement **31** qui détecte l'arrêt de la variation de la position des calibres de contrôle. A cet instant, l'unité de traitement **31** connaît, à l'aide du système de mesure **30,** la position du calibre rentrant en contact avec le récipient de sorte que l'unité de traitement **31** est en mesure de déterminer la conformité dimensionnelle du récipient et le type de défaut détecté pour des récipients dimensionnellement non-conformes. De façon avantageuse, l'unité de traitement **31** connaît, en fonction des occurrences de contact des deux calibres **14, 15** et du système de mesure **30,** la position de l'équipage mobile **6** au moment des contacts des calibres **14**, **15** avec le récipient **2.** L'unité de traitement **31** effectue, à l'aide de ces mesures et occurrences, des calculs donnant des informations dimensionnelles complémentaires sur les cois et les bagues des récipients **2** et en particulier sur les types de défauts présentés par les récipients **2.**

Ainsi, en fonction de la position verticale occupée par chacun des calibres **14**, **15** par rapport au bâti **7** donc par rapport au récipient, lorsqu'intervient au moins un contact avec le récipient, l'unité de traitement **31** est apte à déterminer précisément la conformité dimensionnelle de la bague et du col du récipient. Comme expliqué ci-avant, en fonction de la position verticale occupée par chacun des calibres **14, 15** lorsqu'intervient au moins un contact avec le récipient, l'unité de traitement **31** est apte à déterminer précisément la conformité dimensionnelle de la bague et du col du récipient, car il est possible de déterminer le type de défaut parmi les défauts suivants :
- défaut de diamètre intérieur du col inférieur à un diamètre minimal toléré (défaut dit de brochage ou PLUG ou bore) ;
- défaut de diamètre de débouchage inférieur à un diamètre minimal toléré (défaut dit de débouchage) ;
- défaut de diamètre de débouchage supérieur à un diamètre maximal toléré (défaut dit de débouchage) ;
- défauts de hauteur supérieure au maximum toléré ;
- défauts de hauteur inférieure au minimum toléré ;
- défaut de diamètre extérieur inférieur au minimum toléré ;
- défaut de diamètre extérieur supérieur au maximum toléré.

Il est à noter qu'à l'aide des occurrences de contact de l'un et/ou l'autre des calibres **14, 15** avec le récipient **2,** l'unité de traitement **31** commande, selon la position mesurée de l'équipage mobile **6,** l'inversion du sens de déplacement du système de motorisation visant à faire remonter l'équipage mobile **6.** En pratique, pour des récipients conformes dimensionnellement, les calibres **14, 15** rentrent en contact sensiblement simultanément avec le récipient **2.** En cas d'absence d'un récipient (**Fig**. **5H**), aucun des systèmes de détection **35**, **37** ne détecte un contact. L'unité de traitement **31** est apte à commander la remontée de l'équipage mobile **6** en pilotant le système de motorisation **9,** lorsque l'équipage mobile **6** atteint une position verticale basse déterminée au préalable.

L'invention n'est pas limitée aux exemples décrits et représentés car diverses modifications peuvent y être apportées sans sortir de son cadre tel que défini dans les revendications 1 à 6.

## Revendications

1. - Dispositif d'inspection pour les bagues et cols de récipients **(2),** comportant :
- un équipage mobile (**6**) entraîné par rapport à un bâti (**7**), en un mouvement alternatif selon une direction de déplacement parallèle à l'axe de symétrie des récipients et avec une course maximale, l'équipage mobile étant équipé d'au moins un premier calibre de contrôle (**14, 15**) de la bague et/ou du col des récipients, monté mobile par rapport à l'équipage mobile (**6**) selon une direction de déplacement parallèle à la direction de déplacement de l'équipage mobile ;
- un système de mesure (**30**) de la position du calibre de contrôle par rapport au bâti, dans la direction de déplacement lorsqu'un contact intervient entre le calibre de contrôle et le récipient (**2**), le système de mesure étant relié à une unité de traitement (**31**) ;
- et une unité de traitement (**31**) permettant en fonction des mesures de la position de l'équipage mobile (**6**) lors des occurrences de contact entre le calibre (**14, 15**) et le récipient (**2**), de déterminer la conformité dimensionnelle des bagues et/ou cols des récipients et les types de défauts pour les récipients dimensionnellement non conformes ;
- le système de mesure (**30**) comportant un système sans contact d'émission-réception (**30a**) d'un faisceau optique (**F**) sur le trajet duquel est disposée une cible (**30b**) montée solidaire du premier calibre de contrôle, le système d'émission-réception étant monté solidaire du bâti, et délivrant des mesures en continu de la position du premier calibre de contrôle par rapport au bâti (**7**) ;
- l'unité de traitement (**31**) comportant des moyens pour détecter lorsque les mesures de la position du premier calibre de contrôle (**14, 15**) délivrées par le système d'émission-réception (**30a**) ne varient plus, pour déterminer l'occurrence du contact du premier calibre de contrôle avec le récipient.

2. - Dispositif selon la revendication 1, tel que :
- l'équipage mobile (**6**) comporte un deuxième calibre de contrôle (**14**, **15**), l'un des calibres étant dit externe et contrôlant l'extérieur de la bague des récipients, tandis que l'autre des calibres est dit interne et contrôle l'intérieur de la bague et le col des récipients, les deux calibres (**14**, **15**) étant montés mobiles indépendamment l'un de l'autre et par rapport à l'équipage mobile (**6**) selon une direction de déplacement parallèle à la direction de l'équipage mobile ;
- le système de mesure (**30**) comporte un système sans contact d'émission-réception (**30a**) d'un faisceau optique (**F**) sur le trajet duquel est disposée une cible (**30b**) montée solidaire du deuxième calibre de contrôle, le système d'émission-réception (**30a**) étant monté solidaire du bâti, et délivrant des mesures en continu de la position du deuxième calibre de contrôle (1**4, 15**) par rapport au bâti (**7**) ;
- l'unité de traitement (**31**) comporte des moyens pour détecter lorsque les mesures de la position du deuxième calibre de contrôle délivrées par le système d'émission-réception (**30a**) ne varient plus, pour déterminer l'occurrence du contact du deuxième calibre de contrôle avec le récipient.

3. - Dispositif selon les revendications 1 ou 2, tel que l'unité de traitement (**31**) est relié à un système de motorisation (**9**) de l'équipage mobile (**6**) selon son mouvement alternatif, l'unité de traitement pilotant le système de motorisation (**9**) pour assurer la remontée de l'équipage mobile (**6**) dès la détection d'une occurrence de contact entre un calibre de contrôle (**14**, **15**) et le récipient (**2**).

4. - Dispositif selon les revendications 1 ou 2, tel que le système de mesure (**30**) de la position d'un calibre de contrôle (**14**, **15**) est un capteur optique de distance, déterminant les mesures de la position du calibre de contrôle (**14, 15**) à partir de la longueur du chemin optique entre la cible (**2**) et le système d'émission-réception (**30a**).

5. - Dispositif selon la revendication 4, tel que le système de mesure (**30**) détermine la longueur du chemin optique par une méthode de temps de vol ou dinterférométrie.

6. - Dispositif selon les revendications 1 ou 2, tel que le système de mesure (**30**) de la position d'un calibre de contrôle (**14, 15**) est un capteur optique de position, déterminant les mesures de la position du calibre de contrôle, à partir de la position de la cible dans son champ de mesure.

## Patentansprüche

1. Inspektionsvorrichtung für Ringe und Hälse von Behältern (2), umfassend:
- ein bewegliches Teil (6), das gegenüber einem Gestell (7) in einer hin- und hergehenden Bewegung in einer zur Symmetrieachse der Behälter parallel verlaufenden Bewegungsrichtung und mit einem maximalen Hub angetrieben wird, wobei das bewegliche Teil mit wenigstens einer ersten Lehre zur Überprüfung (14, 15) des Rings und/oder des Halses der Behälter ausgestattet ist, die gegenüber dem beweglichen Teil (6) in einer zur Bewegungsrichtung des beweglichen Teils parallel verlaufenden Bewegungsrichtung beweglich angebracht ist,
- ein System zum Messen (30) der Position der Prüflehre gegenüber dem Gestell in der Bewegungsrichtung, wenn es zwischen der Prüflehre und dem Behälter (2) zu einem Kontakt kommt, wobei das Messsystem mit einer Verarbeitungseinheit (31) verbunden ist, und
- eine Verarbeitungseinheit (31), die in Abhängigkeit von den Messungen der Position des beweglichen Teils (6) beim Auftreten eines Kontakts zwischen der Lehre (14, 15) und dem Behälter (2) ermöglicht, die Maßübereinstimmung der Ringe und/oder Hälse der Behälter und die Fehlerarten für die abmessungstechnisch nicht ordnungsgemäßen Behälter zu bestimmen,
- wobei das Messsystem (30) ein berührungsloses System zum Senden-Empfangen (30a) eines Lichtstrahls (F) umfasst, auf dessen Weg ein mit der ersten Prüflehre fest verbunden angebrachtes Ziel (30b) angeordnet ist, wobei das Sende-Empfangs-System mit dem Gestell fest verbunden angebracht ist und fortlaufend Messwerte der Position der ersten Prüflehre in Bezug auf das Gestell (7) liefert,
- wobei die Verarbeitungseinheit (31) Mittel umfasst, um zu erfassen, wenn sich die durch das Sende-Empfangs-System (30a) gelieferten Messwerte der Position der ersten Prüflehre (14, 15) nicht mehr ändern, um das Auftreten des Kontaktes der ersten Prüflehre mit dem Behälter zu bestimmen.

2. Vorrichtung nach Anspruch 1, welche derart ist, dass:
- das bewegliche Teil (6) eine zweite Prüflehre (14, 15) umfasst, wobei eine der Lehren eine sogenannte äußere ist und die Außenseite des Rings der Behälter überprüft, während die andere der Lehren eine sogenannte innere ist und die Innenseite des Rings und den Hals der Behälter überprüft, wobei die beiden Lehren (14, 15) unabhängig voneinander und gegenüber dem beweglichen Teil (6) in einer zu der Richtung des beweglichen Teils parallel verlaufenden Bewegungsrichtung beweglich angebracht sind,
- das Messsystem (30) ein berührungsloses System zum Senden-Empfangen (30a) eines Lichtstrahls (F) umfasst, auf dessen Weg ein mit der zweiten Prüflehre fest verbunden angebrachtes Ziel (30b) angeordnet ist, wobei das Sende-Empfangs-System (30a) mit dem Gestell fest verbunden angebracht ist und fortlaufend Messwerte der Position der zweiten Prüflehre (14, 15) in Bezug auf das Gestell (7) liefert,
- die Verarbeitungseinheit (31) Mittel umfasst, um zu erfassen, wenn sich die durch das Sende-Empfangs-System (30a) gelieferten Messwerte der Position der zweiten Prüflehre nicht mehr ändern, um das Auftreten des Kontaktes der zweiten Prüflehre mit dem Behälter zu bestimmen.

3. Vorrichtung nach den Ansprüchen 1 oder 2, welche derart ist, dass die Verarbeitungseinheit (31) mit einem System zum Antrieb (9) des beweglichen Teils (6) in seiner hin- und hergehenden Bewegung verbunden ist, wobei die Verarbeitungseinheit das Antriebssystem (9) steuert, um die Aufwärtsbewegung des beweglichen Teils (6) sicherzustellen, sobald ein Auftreten eines Kontaktes zwischen einer Prüflehre (14, 15) und dem Behälter (2) erfasst wird.

4. Vorrichtung nach den Ansprüchen 1 oder 2, welche derart ist, dass das System zum Messen (30) der Position einer Prüflehre (14, 15) ein optischer Abstandssensor ist, der die Messwerte der Position der Prüflehre (14, 15) anhand der Länge des Lichtweges zwischen dem Ziel (2) und dem Sende-Empfangs-System (30a) bestimmt.

5. Vorrichtung nach Anspruch 4, welche derart ist, dass das Messsystem (30) die Länge des Lichtweges durch eine Laufzeit- oder Interferometrie-Methode bestimmt.

6. Vorrichtung nach den Ansprüchen 1 oder 2, welche derart ist, dass das System zum Messen (30) der Position einer Prüflehre (14, 15) ein optischer Positionssensor ist, der die Messwerte der Position der Prüflehre anhand der Position des Ziels in seinem Messfeld bestimmt.

## Claims

1. An inspection device for the rings and necks of containers (2), the device comprising:
• movable equipment (6) driven relative to a stand (7) with reciprocating motion in a travel direction parallel to the axis of symmetry of containers and over a maximum stroke, the movable equipment being provided at least with a first inspection gauge (14, 15) for inspecting the rings and/or necks of containers, which gauge is movably mounted relative to the movable equipment (6) in a travel direction parallel to the travel direction of the movable equipment;
• a measurement system (30) for measuring the position of the inspection gauge relative to the stand in the travel direction when contact occurs between the inspection gauge and the container (2), the measurement system being connected to a processor unit (31); and
• a processor unit (31) responding to the measured positions of the movable equipment (6) in the event of contact occurring between the gauge (14, 15) and the container (2) in order to determine whether the dimensions of the rings and/or necks of containers are acceptable and to determine the types of defects of containers that have dimensions that are not acceptable;
• the measurement system (30) comprising a contactless transceiver system (30a) for emitting and receiving a light beam (F) along a path in which there is arranged a target (30b) that is securely mounted to the first inspection gauge, the transceiver system being secured to the stand, and delivering measurements continuously of the position of the first inspection gauge relative to the stand (7); and
• the processor unit (31) comprising means for detecting when the measurements of the position of the first inspection gauge (14, 15) delivered by the transceiver system (30a) cease varying, in order to determine that contact has occurred between the first inspection gauge and the container.

2. A device according to claim 1, such that:
• the movable equipment (6) includes a second inspection gauge (14, 15), one of the gauges being an "outer" gauge for inspecting the outsides of the rings of containers, while the other gauge is an "inner" gauge for inspecting the insides of the rings and the necks of containers, both gauges (14, 15) being mounted to be movable independently of each other relative to the movable equipment (6) in a travel direction parallel to the travel direction of the movable equipment;
• the measurement system (30) includes a contactless transceiver system (30a) for emitting and receiving a light beam (F) along a path in which there is arranged a target (30b) securely mounted to the second inspection gauge, the transceiver system (30a) being securely mounted to the stand, and delivering measurements continuously of the position of the second inspection gauge (14, 15) relative to the stand (7); and
• the processor unit (31) includes means for detecting when the measurements of the position of the second inspection gauge as delivered by the transceiver system (30a) cease varying, in order to determine that contact has occurred between the second inspection gauge and the container.

3. A device according to claim 1 or claim 2, such that the processor unit (31) is connected to a drive system (9) for driving the movable equipment (6) in its reciprocating motion, the processor unit controlling the drive system (9) to cause the movable equipment (6) to move upwards as soon as it is detected that contact has occurred between an inspection gauge (14, 15) and the container (2).

4. A device according to claim 1 or claim 2, such that the system (30) for measuring the position of an inspection gauge (14, 15) is an optical distance sensor that determines measurements of the position of the inspection gauge (14, 15) on the basis of the length of the light path between the target (2) and the transceiver system (30a).

5. A device according to claim 4, such that the measurement system (30) determines the length of the light path by a time of flight method or by an interferometry method.

6. A device according to claim 1 or claim 2, such that the system (30) for measuring the position of an inspection gauge (14, 15) is an optical position sensor that determines measurements of the position of the inspection gauge of the basis of the position of the target in its measurement field.
